# EUROPEAN PATENT APPLICATION

(11) **EP 4 644 709 A1**
(43) Date of publication of application: **05.11.2025**
(21) Application number: 23910827.7
(22) Date of filing: 28.12.2023
(51) Int. Cl.: F16B 7/00, A47B 13/02

(54) **DETACHABLE CONNECTION STRUCTURE OF ASSEMBLED FRAME, AND HEIGHT-ADJUSTABLE PLATFORM**

(30) Priority: 30.12.2022 CN 202211712571
(71) Applicant: Changzhou Kaidi Electrical Inc., Changzhou,Jiangsu 213000 (CN)
(72) Inventor: XU, Jindong, Jiangsu 213000 (CN); DU, Ning, Jiangsu 213000 (CN)
(74) Representative: karo IP
(86) International application number: PCT/CN2023/142755
(87) International publication number: WO 2024/140910

(57) **Abstract**

The present disclosure relates to the technical field of electric lifting desks, and in particular, to a detachable connection structure for an assembled frame, which is used to connect a lifting column and a desk top. The frame includes a cross beam assembly. The cross beam assembly includes two cross beams arranged in parallel, a first connecting member snapped in the middle of the two cross beams, and a second connecting member snapped at the ends of the two cross beams. The first connecting member and the second connecting member are respectively provided with a snap-fit portion and an undercut portion adapted to the cross beams. The cross beams are provided with retaining grooves adapted to the undercut portions. The snap-fit portions are snapped onto the cross beams, and the undercut portions are snapped into the retaining grooves, so as to detachably fix the first connecting member, the second connecting member, and the two cross beams together. The detachable connection structure for the assembled frame disclosed in the present disclosure is detachable as a whole and simple to assemble. The assembly of the desk frame can be completed without tools, which reduces the manufacturing difficulty and cost, reduces the defects caused by welding deformation, and improves the product quality.

## Description

### TECHNICAL FIELD

The present disclosure relates to the technical field of electric lifting desks, and in particular, to a detachable connection structure for an assembled frame and a lifting platform.

### BACKGROUND

Electric lifting desks are loved by people for their function of electrically adjusting the height of the desk top. The frame of an electric lifting desk generally includes baseboards, lifting columns, frames, and the like. In the prior art, the frame of an electric lifting desk is usually composed of multiple cross beams and longitudinal beams welded together. Chinese Patent (CN217390195U) discloses a technical scheme for simple installation of a desk top frame and lifting columns, in which the installation frame of the lifting columns is composed of multiple cross beams and welding plates welded together. This makes the overall size of the desk frame relatively large in packaging design, resulting in very high packaging and transportation costs.

In addition, during the welding process, in order to ensure the fit between the installation frame and the lifting columns, the installation frame needs to rely on relatively complex welding positioning fixtures and gauges to ensure precision, thus leading to higher welding costs and lower production efficiency.

### SUMMARY

The technical problem to be solved by the present disclosure is to overcome the deficiencies in the prior art and provide a detachable connection structure for an assembled frame, which can reduce the welding process in the manufacturing process, lower the packaging and transportation costs, and achieve simple and rapid assembly.

The technical scheme adopted by the present disclosure to solve its technical problems is as follows: A detachable connection structure for an assembled frame is used for connecting a lifting column and a desk top. The frame includes a cross beam assembly. The cross beam assembly includes two cross beams arranged in parallel, a first connecting member snapped in the middle of the two cross beams, and a second connecting member snapped at the ends of the two cross beams. Both the first connecting member and the second connecting member are provided with a snap-fit portion and an undercut portion adapted to the cross beams. The cross beams are provided with retaining grooves adapted to the undercut portions. The snap-fit portions are snapped onto the cross beams, and the undercut portions are snapped into the retaining grooves, so as to detachably fix the first connecting member, the second connecting member, and the two cross beams together.

Further, the width of the snap-fit portions of the first connecting member and the second connecting member is greater than the width of the cross beams, and a locking insert is provided between the snap-fit portions and the cross beams.

Further, the locking insert has a wedge-shaped portion and a barb portion.

Further, the angle of the wedge-shaped portion is from 1° to 10°.

Further, the first connecting member and the second connecting member are provided with barb grooves adapted to the barb portions.

Further, the first connecting member and the second connecting member comprise a bottom plate and two side plates vertically connected to the bottom plate.

Further, the first connecting member and the second connecting member are also provided with a support portion.

Further, the first connecting member and the second connecting member are also provided with wire-clamping holes.

Further, the cross beams are hollow pipes, a middle connecting rod is sleeved inside the cross beams, and a plurality of first sliding pieces and second sliding pieces are provided between the cross beams and the middle connecting rod.

Further, the first sliding piece is provided with a boss, and the first sliding piece is snapped on the middle connecting rod through the boss.

Further, the second sliding piece is provided with a blocking portion and an anti-drop barb, and the second sliding piece is snapped on the cross beam through the anti-drop barb.

Further, corner-wrapping portions are provided at the two side edges of the first sliding piece and the second sliding piece, and chamfered portions are also respectively provided on the first sliding piece and the second sliding piece.

Further, the first connecting member and/or the second connecting member extend(s) with elongated portions to both sides.

Further, the two cross beams have two different sizes, wherein, one of the cross beams can be sleeved inside the other cross beam.

A lifting platform comprises a desk surface and the detachable connection structure for an assembled frame according to any one of the above.

Further, the desk surface is a three-ply panel assembled front-to-back, and the desk surface is fixedly installed integrally with the assembled frame.

Further, the desk surface is a three-ply panel assembled left-to-right, and the desk surface is fixedly installed integrally with the assembled frame.

Further, two sets of the assembled frames are fixedly connected to the desk surface, and the two sets of assembled frames are fixedly connected together through the first connecting member and the second connecting member.

Further, a groove adapted to the assembled frame is provided on the back of the desk surface, and the assembled frame is embedded and installed inside the desk surface.

Further, the assembled frame is quickly installed on the desk surface through combined expansion screws.

The present disclosure has the beneficial effects of:
(1) The detachable connection structure for the assembled frame disclosed in the present disclosure is simple to assemble and convenient to disassemble. The assembly of the frame can be completed without tools. In addition, the use of locking inserts to tighten the cross beams with the first connecting member and the second connecting member makes the locking more secure, which can meet the test requirements for the rigidity and strength of the electric lifting platform.
(2) The detachable connection structure for the assembled frame disclosed in the present disclosure reduces the welding process in the production and manufacturing process, lowers the manufacturing difficulty and cost, and improves the product quality.
(3) After the first connecting member and the second connecting member in the present disclosure are snap-fitted with the cross beams, the undercut portions are only snap-fitted within the wall thickness of the cross beams and do not protrude into the inner walls of the cross beams. The inner walls of the cross beams remain hollow and unobstructed, which does not affect the telescoping of the middle connecting rod inside the cross beams, effectively increasing the lateral telescoping range of the cross beam assembly.
(4) The detachable connection structure for the assembled frame disclosed in the present disclosure is composed of assembled parts. Before assembly, they are in the form of bar-like loose parts, which is beneficial to reducing the packaging volume and packaging cost, and also lowering the transportation cost.
(5) In the present disclosure, the first connecting member and the second connecting member can be respectively extended and used as longitudinal beams. This not only saves the use of longitudinal beams but also ensures the rigidity and strength of the lifting platform. Especially in the lifting platforms with three-ply panel desk surfaces and four-leg lifting platforms, using the lengthened first connecting member and second connecting member as longitudinal beams greatly simplifies the frame structure and reduces the production, manufacturing, packaging, and transportation costs.

### DESCRIPTION OF THE DRAWINGS

The present disclosure will be further described below in conjunction with the accompanying drawings and embodiments.
FIG. 1 is a first overall schematic diagram of the cross beam assembly of the present disclosure.
FIG. 2 is a second overall schematic diagram of the cross beam assembly of the present disclosure.
FIG. 3 is an exploded schematic diagram of the cross beam assembly of the present disclosure.
FIG. 4 is an assembly schematic diagram of the first connecting member of the present disclosure.
FIG. 5 is an assembly schematic diagram of the second connecting member of the present disclosure.
FIG. 6 is a structural schematic diagram of the first connecting member and the second connecting member of the present disclosure.
FIG. 7 is a structural schematic diagram of the cross beam of the present disclosure.
FIG. 8(a) is a first structural schematic diagram of the locking insert of the present disclosure.
FIG. 8(b) is a second structural schematic diagram of the locking insert of the present disclosure.
FIG. 9 is an exploded installation diagram of the cross beam and the middle connecting rod of the present disclosure.
FIG. 10 is a reverse side schematic diagram of the first sliding piece and the second sliding piece of the present disclosure.
FIG. 11 is a front side schematic diagram of the first sliding piece and the second sliding piece of the present disclosure.
FIG. 12 is a schematic diagram of the plug-in connection of the cross beams of the present disclosure.
FIG. 13 is a schematic diagram of the snap-fit connection between the longitudinal beam and the cross beam assembly of the present disclosure.
FIG. 14 is a schematic diagram of the longitudinally three-ply panel lifting platform of the present disclosure.
FIG. 15 is a schematic diagram of the transversely three-ply panel lifting platform of the present disclosure.
FIG. 16 is a schematic diagram of the four-leg lifting platform of the present disclosure.
FIG. 17 is a schematic diagram of the frame-embedded lifting platform of the present disclosure.
FIG. 18 is an exploded installation schematic diagram of the frame-embedded lifting platform of the present disclosure.
FIG. 19 is an enlarged view of part A in FIG. 18 of the present disclosure.
FIG. 20 is a mounting diagram of the assembled frame and the lifting column of the present disclosure.

In the drawings:
10. Cross beam assembly; 11. Cross beam; 11'. Second cross beam; 11a. First retaining groove; 11b. Second retaining groove; 11c. Anti-drop groove; 12. First connecting member; 13. Second connecting member; 12a. First snap-fit portion; 13a. Second snap-fit portion; 12b. First undercut portion, 13b. Second undercut portion; 12c. First barb groove; 13c. Second barb groove; 12d. First support portion; 13d. Second support portion; 12e. First wire-clamping hole; 13e. Second wire-clamping hole; 14. Locking insert; 14a. Wedge-shaped portion; 14b. Barb portion;
20. Middle connecting rod; 20a. Installation hole; 20b. Relief hole; 21. First sliding piece; 21a. Boss; 21b. Comer-wrapping portion; 21c. First chamfered portion; 22c. Second chamfered portion; 22. Second sliding piece; 22a. Blocking portion; 22b. Anti-drop barb;
30. Longitudinal beam;
40. Desk surface; 41. Expansion sleeve; 42. Expansion pin.

### DETAILED DESCRIPTION

The present disclosure will now be further described in conjunction with the accompanying drawings. These drawings are simplified schematic diagrams for explaining only the basic structure of the present disclosure in a schematic manner, and therefore show only the construction related to the present disclosure.

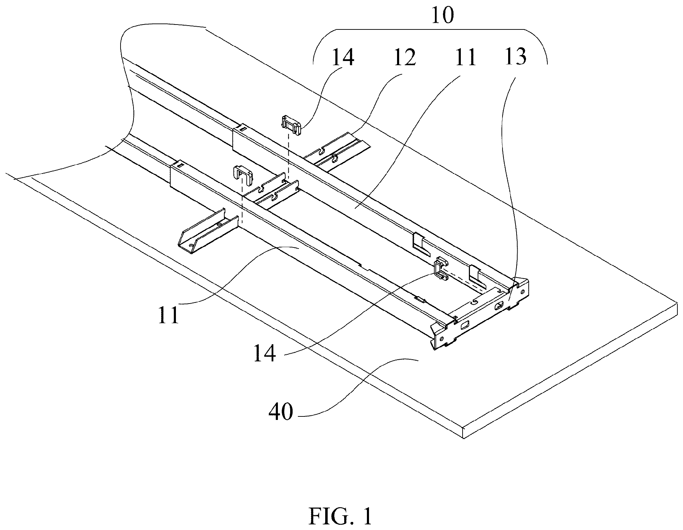

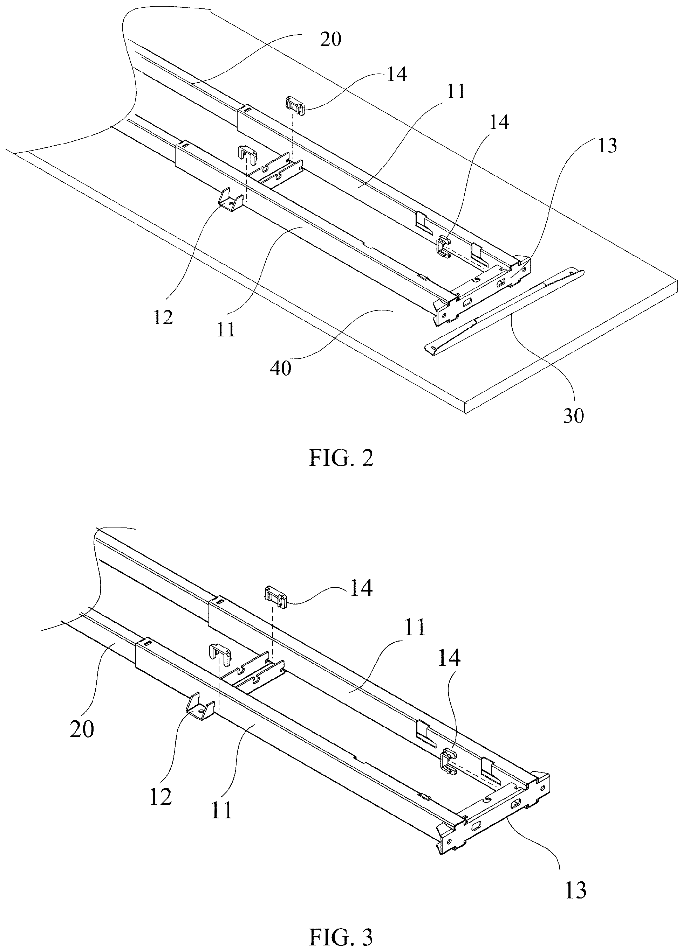

As shown in FIGS. 1 to 20, this embodiment discloses a detachable connection structure for an assembled frame and a lifting platform. As shown in FIGS. 1 and 2, the detachable connection structure of the assembled frame is used for connecting a lifting column and a desk top. The frame mainly includes a cross beam assembly 10, which further includes two parallel cross beams 11, a first connecting member 12, and a second connecting member 13. Wherein, the first connecting member 12 is clamped between the two cross beams 11 via retaining grooves and barb structures, and the second connecting member 13 is likewise secured at the end of the cross beam 11 through a retaining groove and barb structure. The first connecting member 12 and the second connecting member 13 fix the two cross beams 11 into one piece through their own distance-setting and positioning functions, forming the cross beam assembly 10. The cross beam assembly 10 is connected to the desk surface 40 through fasteners. Additionally, the cross beam 11 is a hollow pipe, and a middle connecting rod 20 can be inserted into the cross beam 11 to connect two sets of cross beam assemblies 10, forming a complete frame. In FIG. 1, the first connecting member 12 is lengthened and can be used as a longitudinal beam; in FIG. 2, the first connecting member 12 and the second connecting member 13 only serve a snap-fit connection function, and a longitudinal beam 30 is separately installed at the end of the cross beam assembly 10.

With reference to FIGS. 3 to 7, in order to realize the snap-fitting of the first connecting member 12 and the second connecting member 13 with the cross beam 11, a first retaining groove 11a and a second retaining groove 11b are provided on the cross beam 11. A first snap-fit portion 12a and a first undercut portion 12b are provided on the first connecting member 12. The first snap-fit portion 12a is snapped onto the cross beam 11, and the first undercut portion 12b is snapped into the first retaining groove 11a. The second connecting member 13 is similar in structure to the first connecting member 12. It is also provided with a second snap-fit portion 13a and a second undercut portion 13b. The second snap-fit portion 13a is snapped onto the cross beam 11, and the second undercut portion 13b is snapped into the second retaining groove 11b. At this time, the first connecting member 12, the second connecting member 13 and the two cross beams 11 form a stable-structured enclosure, namely the cross beam assembly 10.

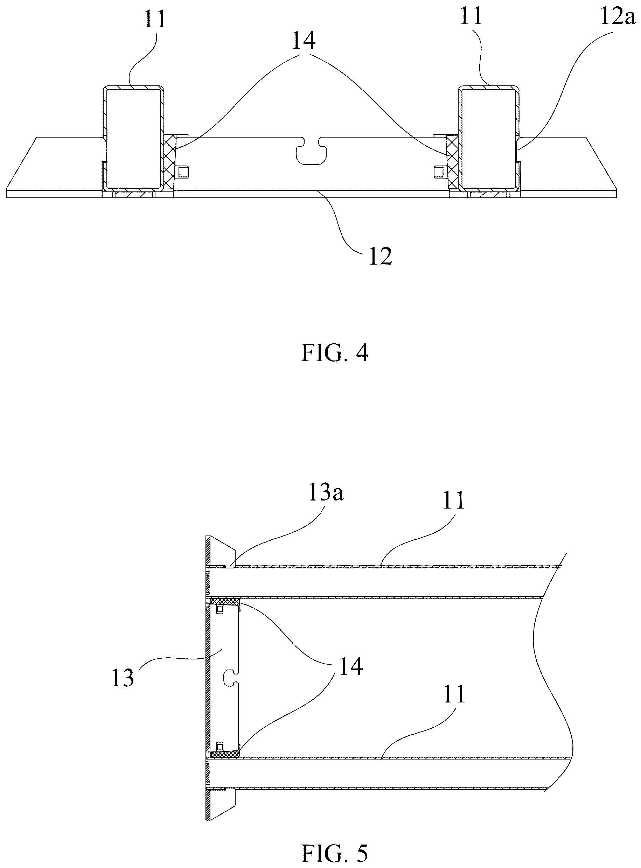

Under this technical scheme, the dimensions of the first snap-fit portion 12a and the second snap-fit portion 13a are required to be consistent with those of the cross beam 11. Therefore, high dimensional accuracy is required. Moreover, since the first undercut portion 12b and the second undercut portion 13b are respectively snapped rigidly into the first retaining groove 11a and the second retaining groove 11b, it is rather difficult to snap them onto the cross beam 11. Preferably, as shown in FIGS. 4 and 5, the dimensions of the first snap-fit portion 12a and the second snap-fit portion 13a are slightly larger than those of the cross beam 11, and a locking insert 14 is provided at the first snap-fit portion 12a and the second snap-fit portion 13a. The gap between the first snap-fit portion 12a, the second snap-fit portion 13a and the cross beam 11 is eliminated by the locking insert 14. During installation, first, the cross beam 11 is snap-fitted the first connecting member 12. Since the dimension of the first snap-fit portion 12a is larger than that of the cross beam 11, it can be easily snapped on, and the first undercut portion 12b is snapped into the first retaining groove 11a of the cross beam. As the dimension of the first snap-fit portion 12a is slightly larger than that of the cross beam 11, there is still a certain gap in the first snap-fit portion 12a. Then, the locking insert 14 is inserted into the gap. The first snap-fit portion 12a, the second snap-fit portion 13a and the cross beam 11 are tightened by the wedge-shaped portion 14a to achieve a fixed connection. The second connecting member 13 can be installed using the same method.

In addition, in the prior art, the longitudinal beam connected to the middle of the cross beam is generally welded. Even if the snap-fit or screw-connection method is adopted, generally, some parts will be snapped into the inner wall of the cross beam, which prevents the middle connecting rod from telescoping. In the technical scheme disclosed in the present disclosure, as shown in FIGS. 4 and 5, after the first undercut portion 12b and the second undercut portion 13b are respectively snapped into the first retaining groove 11a and the second retaining groove 11b, they do not protrude into the inner wall of the cross beam 11. The inner wall of the cross beam 11 remains hollow and unobstructed. The middle connecting rod 20 can be inserted into the cross beam 11 without being blocked by other parts and is not restricted by the snap-fit position of the first connecting member 12, which greatly improves the telescopic range of the cross beam assembly. Moreover, the first retaining groove 11a and the second retaining groove 11b are small holes opened on the cross beam 11, which have very little impact on the strength of the cross beam 11 and at the same time ensure the overall strength requirement of the frame.

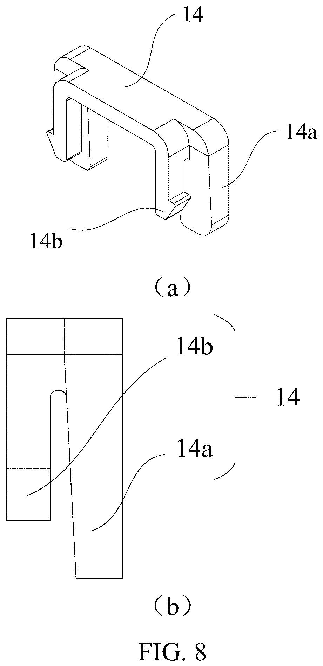

Preferably, as shown in FIGS. 8(a) and 8(b), the locking insert 14 has a wedge-shaped portion 14a and a barb portion 14b. The wedge-shaped portion 14a can be inserted into the first snap-fit portion 12a and the second snap-fit portion 13a. The surfaces of the first snap-fit portion 12a and the second snap-fit portion 13a that are in contact with the locking insert 14 are set at the same angle as the wedge-shaped portion 14a to tighten the first connecting member 12, the second connecting member 13 and the two cross beams 11 respectively. Since the wedge-shaped portion 14a has a wedge angle, the gap between the connecting members and the cross beams can be filled by the insertion depth. Therefore, the requirements for dimensional manufacturing accuracy of the first snap-fit portion 12a, the second snap-fit portion 13a and the cross beam 11 can be relaxed. Preferably, the angle of the wedge-shaped portion 14a is from 1° to 10°.

The first connecting member 12 and the second connecting member 13 are also respectively provided with a first barb groove 12c and a second barb groove 13c which are adapted to the barb portion 14b. The wedge-shaped portion 14a of the locking insert 14 is connected with the barb portion 14b. The whole barb portion 14b is snapped into the two walls of the first connecting member 12 or the second connecting member 13, and the barb portion 14b is snapped into the first barb groove 12c or the second barb groove 13c. The barb portion 14b can effectively prevent the locking insert 14 from falling off during use.

Preferably, as shown in FIG. 8, the locking insert 14 is a plastic part and is manufactured through an injection-molding integrated forming process. There is a gap between the wedge-shaped portion 14a and the barb portion 14b of the locking insert 14, which makes the barb portion 14b more easily deformable and facilitates the installer to manually assemble the frame.

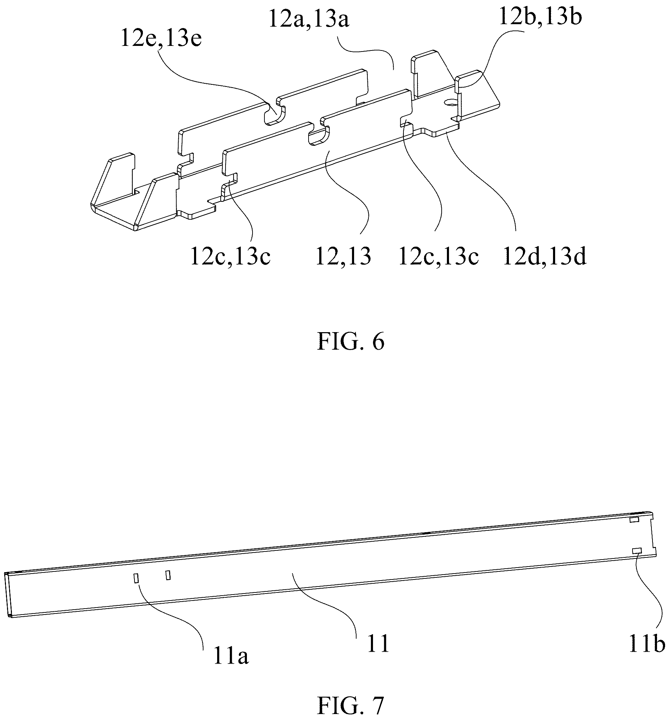

As shown in FIG. 6, the first connecting member 12 and the second connecting member 13 are composed of a bottom plate and side plates vertically connected on both sides, with a U-shaped cross-section. The two side plates strengthen the bottom plate, improving the bending strength of the bottom plates of the first connecting member 12 and the second connecting member 13. The first snap-fit portion 12a, the second snap-fit portion 13a, the first undercut 12b, and the second undercut 13b are all located on the side plates. When the first snap-fit portion 12a, the second snap-fit portion 13a, the first undercut 12b, and the second undercut 13b on the two side plates are simultaneously snap-fitted into the cross beam 11, the snap-fit connection becomes more stable. Preferably, the first connecting member 12 is also provided with a first support portion 12d and a first wire-clamping hole 12e, and the second connecting member 13 is also provided with a second support portion 13d and a second wire-clamping hole 13e.

When the second connecting member 13 is connected to the end of the cross beam 11, the first support portion 12d and the second support portion 13d are fittingly snapped into the pipe wall of the cross beam 11 to support the pipe wall of the cross beam 11. Since the pipe opening of the cross beam 11 is the part with relatively weak strength, after the first support portion 12d and the second support portion 13d are fittingly snapped into the pipe opening of the cross beam 11, the risk caused by the too-thin pipe wall of the cross beam 11 can be effectively eliminated. Similarly, the cross beam 11 can appropriately reduce the wall thickness while ensuring the mechanical performance, which reduces the production cost and resource consumption.

In addition, the first wire-clamping hole 12e and the second wire-clamping hole 13e can be used to clamp the wiring harness, thus playing a role in fixing the wiring harness. The first connecting member 12 and the second connecting member 13 are also provided with a plurality of installation holes for fixed connection with the desk surface.

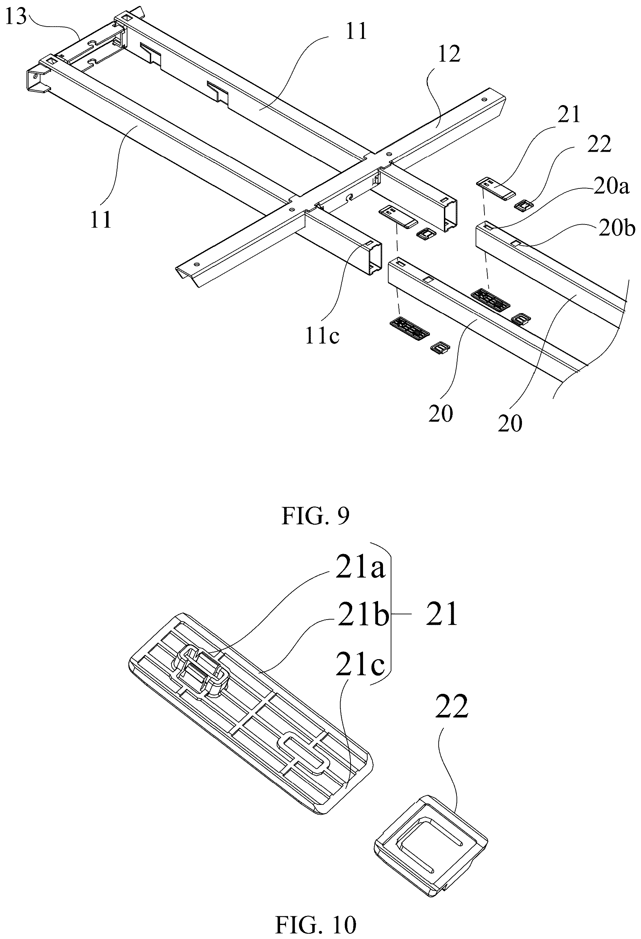

To adapt to desk surfaces of different sizes, the frame is generally designed to be horizontally telescopic. In the prior art, a three-section connection method is usually adopted. That is, there is a set of cross beam assemblies on each side of the frame, and a middle connecting rod is sleeved in the middle. Set screws are used to fix the middle connecting rod and the cross beam. Usually, at least 8 set screws are required, and this solution is time-consuming and labor-intensive during installation. The technical scheme disclosed in this embodiment is as follows: As shown in FIGS. 9 to 11, the cross beam 11 is a hollow pipe, and the middle connecting rod 20 is sleeved inside the cross beam 11. A plurality of first sliding pieces 21 and second sliding pieces 22 are arranged between the cross beam 11 and the middle connecting rod 20. The first sliding piece 21 is provided with a boss 21a, and the middle connecting rod 20 is provided with an installation hole 20a adapted to the boss 21a. The first sliding piece 21 is snapped onto the middle connecting rod 20 through the boss 21a and the installation hole 20a. Moreover, the boss 21a is provided with an undercut structure. After the boss 21a is snapped into the installation hole 20a, the first sliding piece 21 is kept in close contact with the middle connecting rod 20 through the undercut structure to prevent it from falling off.

The cross beam 11 is also provided with an anti-drop groove 11c. After the middle connecting rod 20 is inserted into the cross beam 11, the anti-drop barb 22b is snapped into the anti-drop groove 11c. Under the action of the blocking portion 22a and the anti-drop barb 22b, the second sliding piece 22 is fixed on the cross beam 11. The cross beam 11 and the middle connecting rod 20 are sleeved, and the gap between them is eliminated by the first sliding piece 21 and the second sliding piece 22. When it is necessary to adjust the width of the frame, one only needs to stretch the two cross beam assemblies 10 outward, and there is no need to lock the middle connecting rod 20 again. The middle connecting rod 20 is also provided with a relief hole 20b, and the second sliding piece 22 is provided with an anti-drop barb 22b. When the middle connecting rod 20 with the first sliding piece 21 and the second sliding piece 22 installed is inserted into the cross beam 11, the anti-drop barb 22b is deformed by the extrusion of the pipe wall and can enter the relief hole 20b. After installation, the first sliding piece 21 is fixed at the end of the middle connecting rod 20 and inserted into the cross beam 11. The second sliding piece 22 is fixed at the end of the cross beam 11 and does not slide with the middle connecting rod 20.

In addition, the side of the first sliding piece 21 is provided with a corner-wrapping portion 21b, which can wrap around the middle connecting rod 20 to prevent scratches on the inner wall. The first sliding piece 21 and the second sliding piece 22 are also respectively provided with a first chamfered portion 21c and a second chamfered portion 22c. When the middle connecting rod 20 is pulled out or pushed into the cross beam 11, the first chamfered portion 21c and the second chamfered portion 22c come into contact first and fit into each other, so that the first sliding piece 21 and the second sliding piece 22 are tightened against each other. This can effectively prevent the middle connecting rod 20 from being pulled out of the cross beam 11 during horizontal adjustment.

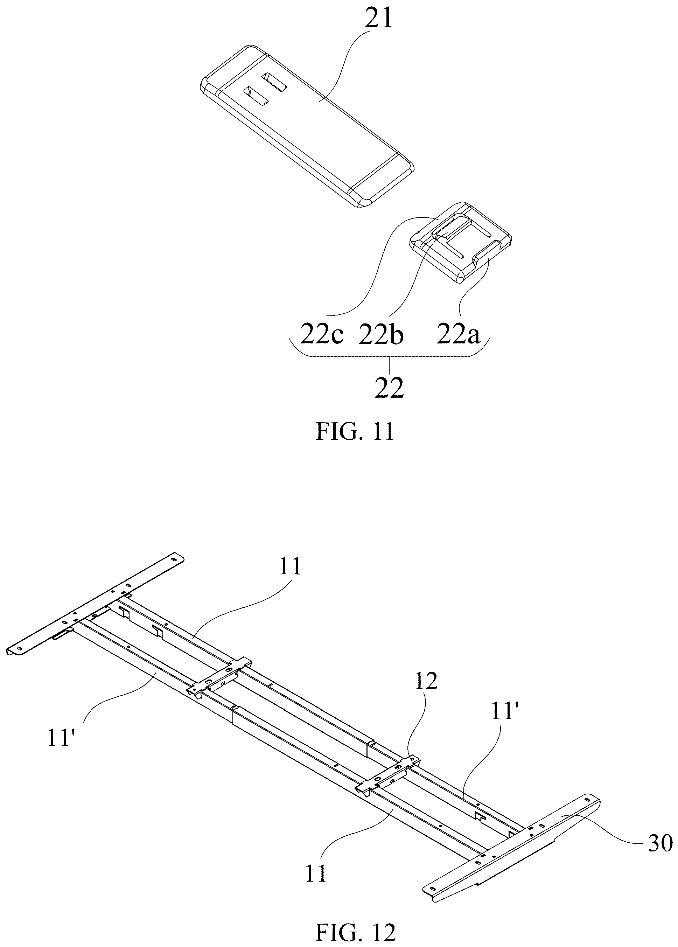

As shown in FIG. 12, it is another embodiment. The two cross beams 11 and the second cross beam 11' in the cross beam assembly 10 are two types of hollow pipes with different cross-sectional sizes. Wherein, the second cross beam 11' can be inserted into the cross beam 11 of another set of cross beam assembly 10. The two sets of cross beam assemblies 10 are inserted into each other and can be telescopically adjusted horizontally to achieve the purpose of adjusting the frame size.

The detachable connection structure of the assembled frame disclosed in this embodiment has multiple application modes, which are exemplified as follows:
As shown in FIG. 1, for a lifting platform, the first connecting member 12 has elongated portion on both sides. This first connecting member 12 can be used as a longitudinal beam, and the desk surface 40 is fixed on the first connecting member 12. This solution can reduce the use of longitudinal beams.

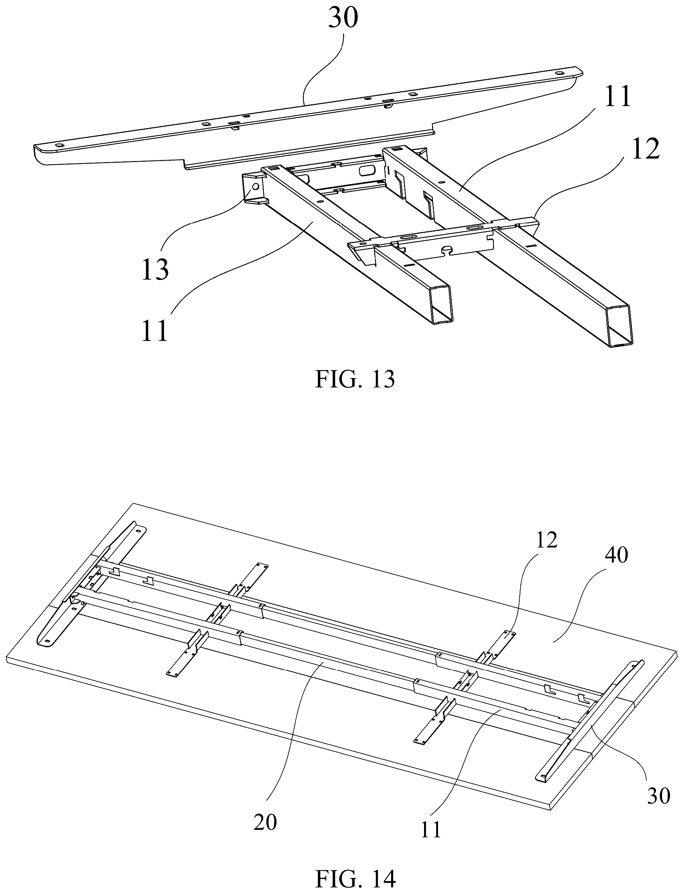

As shown in FIGS. 2 and 13, the first connecting member 12 and the second connecting member 13 are relatively small in size and only serve to fix the two cross beams 11. The frame is additionally provided with a longitudinal beam 30, which is snap-fitted at the end of the cross beam assembly 10. The desk surface 40 is fixed on the first connecting member 12 and the longitudinal beam 30.

As shown in FIG. 14, for a three-ply panel lifting platform, in order to reduce the packaging volume, its desk surface 40 is spliced by three small desk surfaces in the front and back. At this time, the first connecting member 12 can be extended on both sides and locked with the three small desk surfaces respectively. The three-ply panel desk surface is locked into one piece through the first connecting member 12, the second connecting member 13 or the longitudinal beam 30. This design greatly simplifies the frame structure.

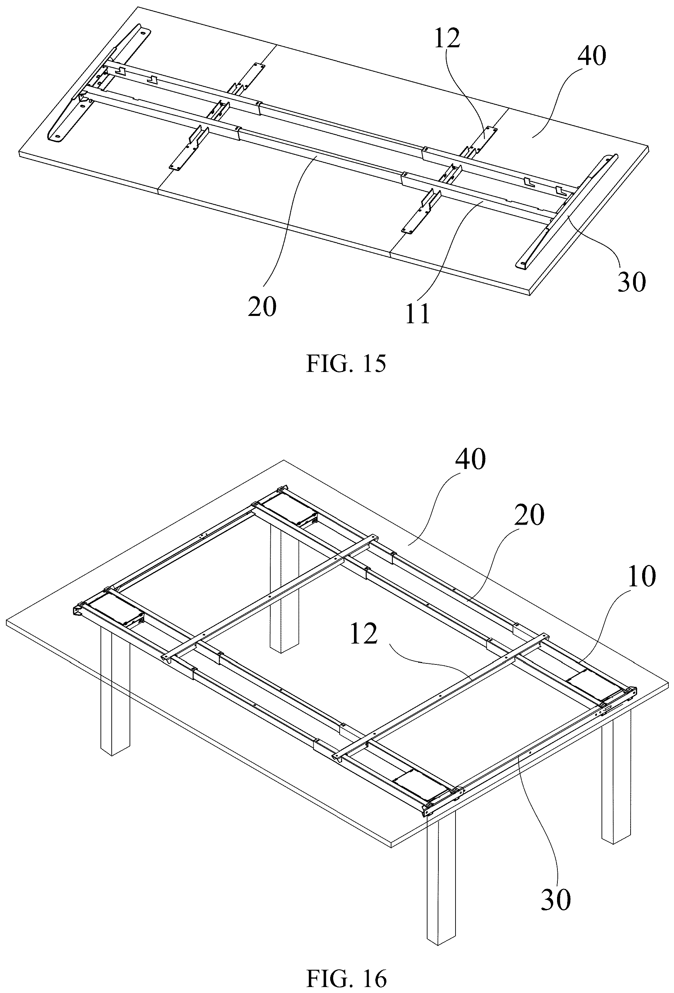

As shown in FIG. 15, for a three-ply panel lifting platform, in order to reduce the packaging volume, its desk surface 40 is spliced by three small desk surfaces on the left and right. At this time, the first connecting member 12 can be extended on both sides and locked with the three desk surfaces respectively. The three-ply panel desk surface is locked into one piece through the first connecting member 12, the second connecting member 13 or the longitudinal beam 30. This design greatly simplifies the frame structure.

As shown in FIG. 16, for a four-leg lifting platform, in order to connect two sets of frames, the first connecting member 12 or the second connecting member 13 can be lengthened to simultaneously snap-fit the cross beam assemblies 10 of the two sets of frames, thus connecting the two sets of lifting platform frames into one piece. In the prior art scheme, for a four-leg lifting platform, to ensure stability, the two sets of frames are welded into one piece through an intermediate beam. This solution not only increases the welding cost but also makes packaging and transportation very inconvenient after the frames are welded. By adopting the connection method disclosed in this embodiment, not only is the overall structural strength of the frame greatly improved and the stability of the lifting platform enhanced, but also the use of connecting beams is effectively reduced, and the packaging and transportation costs are lowered.

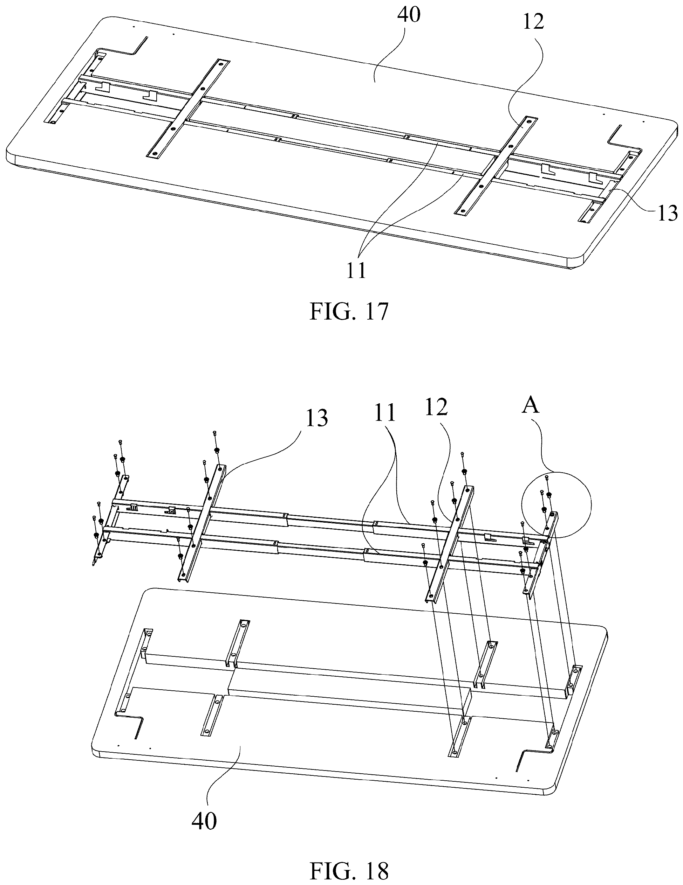

As shown in FIGS. 17 and 18, for a lifting platform desk surface assembly, there are grooves on the back of the desk surface 40 that are adapted to the frame. The frame can be hidden and installed in the grooves of the desk surface 40. Wherein, the first connecting member 12 is installed in the reverse direction, making the frame flush with the desk surface 40, and maximizing the aesthetic appearance under the desk.

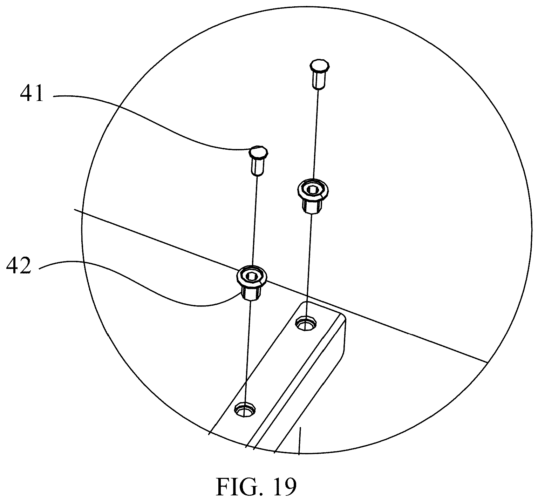

In addition, this embodiment also discloses a tool-free and quick installation method for the frame and the desk surface. As shown in FIGS. 18 and 19, the frame and the desk surface 40 are quickly connected by a combined expansion screw composed of an expansion sleeve 41 and an expansion pin 42. The tightening part of the expansion sleeve 41 is provided with barbed threads and is divided into several pieces along the circumferential direction. During installation, first insert the expansion sleeve 41 into the installation hole, and then press the expansion pin 42 forcefully into the expansion sleeve 41. The expansion sleeve 41 expands under the pressure of the expansion pin 42 and is fixed with the installation hole of the desk surface, thereby fixing the frame and the desk surface 40 into one piece. By adopting this method, the installation of the desk surface and the frame becomes simpler, and it can be installed manually without using tools, with higher installation efficiency.

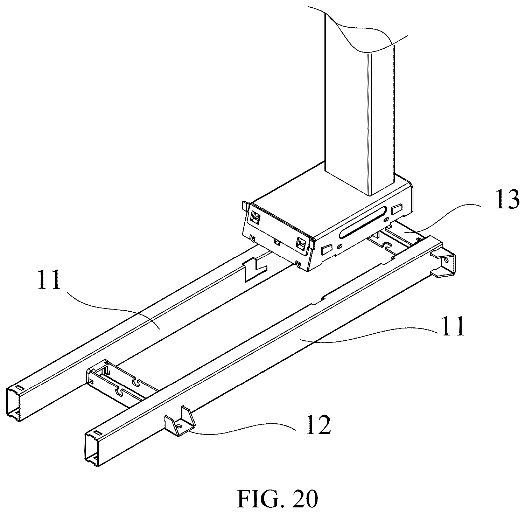

As shown in FIG. 20, this embodiment discloses a detachable connection structure of an assembled frame. The frame is provided with several grooves for connection, and the lifting column is provided with convex hulls adapted to the grooves. The lifting column is also provided with a locking assembly. When the lifting column is installed with the frame, the convex hulls are embedded in and cooperate with the grooves, and the locking of the lifting column and the frame is completed under the action of the locking assembly, so as to achieve the purpose of quick installation.

The above-mentioned embodiments are only used to illustrate the technical concept and characteristics of the present disclosure. The purpose is to enable those familiar with this technology to understand and implement the content of the present disclosure, and they cannot be used to limit the protection scope of the present disclosure. All equivalent changes or modifications made according to the spirit of the present disclosure shall be covered within the protection scope of the present disclosure.

## Claims

1. A detachable connection structure for an assembled frame, used for connecting a lifting column and a desk top, wherein: the frame comprises a cross beam assembly, the cross beam assembly comprises two cross beams arranged in parallel, a first connecting member snapped in the middle of the two cross beams, and a second connecting member snapped at the ends of the two cross beams; both the first connecting member and the second connecting member are provided with a snap-fit portion and an undercut portion; the cross beams are provided with retaining grooves adapted to the undercut portions; the snap-fit portions are snapped onto the cross beams, and the undercut portions are snapped into the retaining grooves, so as to detachably fix the first connecting member, the second connecting member, and the two cross beams together.

2. The detachable connection structure for an assembled frame according to claim 1, wherein: the width of the snap-fit portions of the first connecting member and the second connecting member is greater than the width of the cross beams, and a locking insert is provided between the snap-fit portions and the cross beams.

3. The detachable connection structure for an assembled frame according to claim 2, wherein: the locking insert has a wedge-shaped portion and a barb portion.

4. The detachable connection structure for an assembled frame according to claim 3, wherein: the angle of the wedge-shaped portion is from 1° to 10°.

5. The detachable connection structure for an assembled frame according to claim 3, wherein: the first connecting member and the second connecting member are provided with barb grooves adapted to the barb portions.

6. The detachable connection structure for an assembled frame according to claim 1, wherein: the first connecting member and the second connecting member comprise a bottom plate and two side plates vertically connected to the bottom plate.

7. The detachable connection structure for an assembled frame according to claim 1, wherein: the first connecting member and the second connecting member are also provided with a support portion.

8. The detachable connection structure for an assembled frame according to claim 1, wherein: the first connecting member and the second connecting member are also provided with wire-clamping holes.

9. The detachable connection structure for an assembled frame according to claim 1, wherein: the cross beams are hollow pipes, a middle connecting rod is sleeved inside the cross beams, and a plurality of first sliding pieces and second sliding pieces are provided between the cross beams and the middle connecting rod.

10. The detachable connection structure for an assembled frame according to claim 9, wherein: the first sliding piece is provided with a boss, and the first sliding piece is snapped on the middle connecting rod through the boss.

11. The detachable connection structure for an assembled frame according to claim 9, wherein: the second sliding piece is provided with a blocking portion and an anti-drop barb, and the second sliding piece is snapped on the cross beam through the anti-drop barb.

12. The detachable connection structure for an assembled frame according to claim 9, wherein: corner-wrapping portions are provided at the two side edges of the first sliding piece and the second sliding piece, and chamfered portions are also respectively provided on the first sliding piece and the second sliding piece.

13. The detachable connection structure for an assembled frame according to claim 1, wherein: the first connecting member and/or the second connecting member extend(s) with elongated portions to both sides.

14. The detachable connection structure for an assembled frame according to claim 1, wherein: the two cross beams have two different cross-sectional sizes, wherein, one of the cross beams can be sleeved inside the other cross beam.

15. A lifting platform, wherein: it comprises a desk surface and the detachable connection structure for an assembled frame according to any one of claims 1-14.

16. The lifting platform according to claim 15, wherein: the desk surface is a three-ply panel assembled front-to-back, and the desk surface is fixedly installed integrally with the assembled frame.

17. The lifting platform according to claim 15, wherein: the desk surface is a three-ply panel assembled left-to-right, and the desk surface is fixedly installed integrally with the assembled frame.

18. The lifting platform according to claim 15, wherein: two sets of the assembled frames are fixedly connected to the desk surface, and the two sets of assembled frames are fixedly connected together through the first connecting member and the second connecting member.

19. The lifting platform according to claim 15, wherein: a groove adapted to the assembled frame is provided on the back of the desk surface, and the assembled frame is embedded and installed inside the desk surface.

20. The lifting platform according to claim 15, wherein: the assembled frame is quickly installed on the desk surface through combined expansion screws.
